Europäisches Patentamt

European Patent Office

Office européen des brevets

(11) Veröffentlichungsnummer: **0 405 179 A1**

# (12) EUROPÄISCHE PATENTANMELDUNG

(21) Anmeldenummer: 90110427.3

(22) Anmeldetag: 01.06.90

(51) Int. Cl.⁵: **A01M 7/00**, B01F 5/02

(30) Priorität: 28.06.89 DE 3921092

(43) Veröffentlichungstag der Anmeldung:
02.01.91 Patentblatt 91/01

(84) Benannte Vertragsstaaten:
**BE DE DK FR GB NL SE**

(71) Anmelder: **Amazonen-Werke H. Dreyer GmbH
& Co. KG KG**
**Am Amazonenwerk 9-13**
**D-4507 Hasbergen-Gaste(DE)**

(72) Erfinder: **Wilke, Uwe**
**Westfalenweg 10**
**D-4531 Lotte(DE)**

(54) **Landwirtschaftliche Feldspritze.**

(57) Landwirtschafliche Feldspritze mit einem Flüssigkeitstank (1), einer Pumpe (2), Ausbringelementen (13) sowie einer bis zumindest annähernd bis in den unteren Bereich (15) des Flüssigkeitstanks (1) ragenden Rühranleitung (6), an dessen unterem Ende Austrittsöffnungen (17) zum Austreten von Flüssigkeit angeordnet sind. Um mit einfachsten Mitteln auf kostengünstige Weise eine äußerst wirksame Rühreinrichtung zu schaffen, ist vorgesehen, daß am unteren Ende an der Rührleitung (6) zumindest zwei zumindest annähernd diametral gegenüberliegende Austrittsöffnungen (17) vorgesehen sind, wobei die Mittellinie (18) der Austrittsöffnungen (17) zumindest annähernd jeweils in eine Ecke (19) des rechteck- oder quarderförmigen Behälters (1) gerichtet ist.

FIG. 2

EP 0 405 179 A1

## LANDWIRTSCHAFTLICHE FELDSPRITZE

Die Erfindung betrifft eine landwirtschaftliche Feldspritze gemäß des Oberbegriffes des Patentanspruches 1.

Derartige landwirtschaftliche Feldspritzen sind in der Praxis bekannt geworden. Bei diesen Feldspritzen ist eine im unteren Bereich des Flüssigekeitstanks endende Rührleitung angeordnet, welche mehrere Austrittsöffnungen aufweist, durch welche von einer Pumpe geförderte Füssigkeit, welche dem Tank entnommen wird, austritt und dann die sich im Flüssigkeitstank befindliche Flüssigkeit aufrühren soll, damit die Flüssigkeit gut durchmischt wird bzw. zugegebenes Pulver oder Granulate in die Füssigkeit eingerührt und die sich dann in der Flüssigkeit befindlichen Teilchen in gleichmäßiger Verteilung in Schwebe gehalten werden sollen.

Diese in der Praxis bekannten Rühreinrichtungen sind jedoch nicht zufriedenstellend.

Der Erfindung liegt die Aufgabe zugrunde, mit einfachsten Mitteln auf kostengünstige Weise eine äußerst wirksame Rühreinrichtung zu schaffen.

Diese Aufgabe wird erfindungsgemäß dadurch gelöst, daß am unteren Ende an der Rührleitung zumindest zwei zumindest annähernd diametral gegenüber liegende Austrittsöffnungen vorgesehen sind, wobei die Mittellinie der Austrittsöffnung zumindest annähernd jeweils in eine Ecke des rechteck- oder quarderförmigen Behälters gerichtet ist. Infolge dieser Maßnahme wird in überraschend einfacher Weise die gesamte sich im Vorratsbehälter befindliche Flüssigkeit in eine Umlaufbewegung versetzt. Die Rührwirkung ist somit auf einfachste Weise optimal gestaltet. Eine besonders gute Rührwirkung und ein guter Umlauf der Flüssigkeit wird dadurch erzielt, daß die Austrittsöffnungen düsenartig ausgebildet sind.

Durch die DE-OS 19 39 264 ist es bekannt, durch Einblasen von Druckluft in den Flüssigkeitstank die Flüssigkeiten aufzurühren. Dieses ist jedoch aufwendig und teuer.

Um auch große Flüssigkeitsmengen sehr gut in Umlauf zu bringen und gut durchrühren zu können, ist vorgesehen, daß mehrere Öffnungen übereinander oder nebeneinander angeordnet sind.

Weitere Einzelheiten der Erfindung sind der Beispielbeschreibung und den Zeichnungen zu entnehmen. Hierbei zeigen

Fig. 1 der Aufbau einer Feldspritze in schematischer Darstellung,

Fig. 2 die Anordnung der Rührleitung mit zwei Austrittsöffnungen in der Ansicht II - II und in schematischer Darstellung und

Fig. 3 die Anordnung der Rührleitung mit vier Austrittsöffnungen, die nebeneinander angeordnet sind, in der Ansicht II - II und in schematischer Darstellung.

Die landwirtschaftliche Feldspritze weist den Flüssigkeitstank 1, eine Pumpe 2, ein Druckregelventil 3, eine Dosierarmatur 4, die Rücklaufleitung 5, die Rührleitung 6, sowie die Spritzleitungen 7 auf. An dem Boden des Flüssigkeitstanks 1 ist die Saugleitung 8 mit dem Filter 9 angeschlossen, welche zu der Pumpe 2 führt. Von der Pumpe 2 führt die Druckleitung 10 zu dem Druckregelventil 3 und der Dosierarmatur 4. Die Pumpe 2 wird in bekannter und daher nicht dargestellter Weise von der Zapfwelle eines Schleppers angetrieben. Die Pumpe 2 saugt über die Saugleitung 8 und dem Filter 9 die Spritzmittelflüssigkeit aus dem Flüssigkeitstank 1 an und drückt diese Flüssigkeit über die weiterführende Druckleitung 10 zu dem Druckregelventil 3. Entsprechend den über die Reglerschraube 11 eingestellten Spritzdruck, der an dem Manometer 12 abzulesen ist, wird die gewünschte Flüssigkeitsmenge in bekannter Weise über die Dosierarmatur 4, die für drei Teilbreiten vorgesehen ist, über die an der Dosierarmatur 4 angeschlossenen Leitungen 7 den Spritzdüsen 13 zugeführt. Die zuviel von der Pumpe 2 über die Druckleitung 10 zu dem Druckregelventil 3 geförderte Flüssigkeitsmenge wird über die an dem Druckregelventil 3 angeschlossene Rückführleitung 5 dem Flüssigkeitsvorrat wieder zugeführt. Die Rückführleitung 5 mündet an der Stelle 14 in der Saugleitung 8.

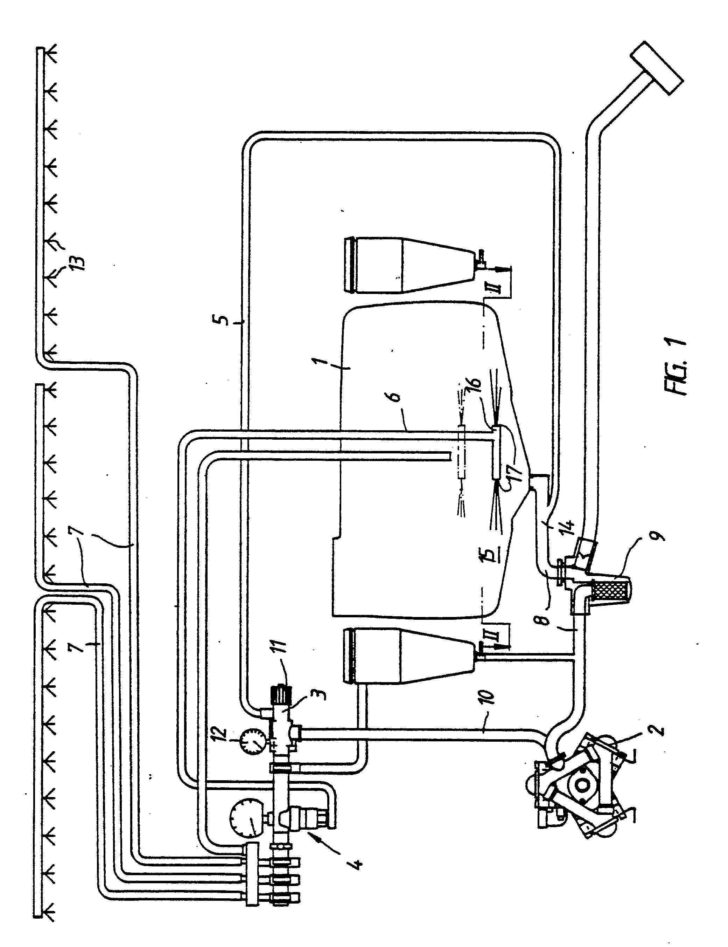

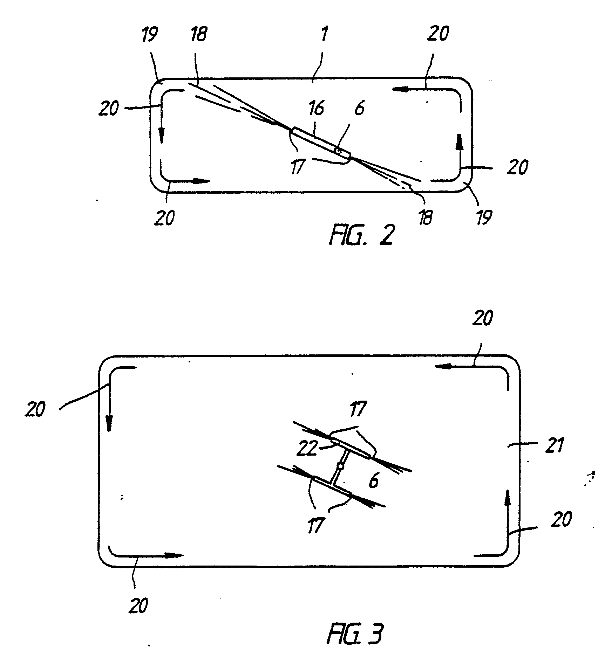

Weiterhin ist an der Dosierarmatur 4 die Rührleitung 6 angeordnet. Die Rührleitung 6 ist bis in den unteren Bereich 15 des Flüssigkeitstanks geführt. Am Ende der Rührleitung 6 befindet sich das Rührstück 16. Das Rührstück 16 der Rührleitung 6 weist, wie die Fig. 1 und 2 zeigen, die beiden düsenartig ausgebildeten Austrittsöffnungen 17 auf, die diametral gegenüberliegend angeordnet sind, wobei die Mittellinie 18 der Austrittsöffnungen 17 zumindest annähernd jeweils in eine Ecke 19 des rechteck- oder quaderförmigen Flüssigkeitstanks 1 gerichtet sind. Hierdurch wird erreicht, daß die Flüssigkeit in eine durch die Pfeile 20 angedeutete umlaufende Bewegung versetzt werden. Hierdurch wird in einfachster Weise ein gutes Aufrühren und Aufmischen der sich im Flüssigkeitstank befindlichen Flüssigkeitsmenge mit dem zugegebenen Spritzmittel, welches in flüssiger Form, pulveriger oder granulatförmiger Form dem Wasser zugegeben wird, erreicht. Diese zugegebene Spritzmittel werden sehr gut in Schwebe gehalten. Es entsteht eine homogene Flüssigkeit.

Bei großen Flüssigkeitstanks 21, sind, wie Fig. 3 zeigt, an Ende der Rührleitung 6 mehrere düsenförmige Austrittsöffnungen 17 an einem Rührstück 22 vorgesehen. Auch hier wird wiederum, wie durch die Pfeile 20 angedeutet ist, eine umlaufende Rührwirkung im Flüssigkeitstank 21 erzielt.

**Ansprüche**

1. Landwirtschafliche Feldspritze mit einem Flüssigkeitstank, einer Pumpe, Ausbringelementen sowie einer bis zumindest annähernd bis in den unteren Bereich des Flüssigkeitstanks ragenden Rühranleitung, an dessen unterem Ende Austrittsöffnungen zum Austreten von Flissigkeit angeordnet sind, dadurch gekennzeichnet, daß am unteren Ende an der Rührleitung (6) zumindest zwei zumindest annähernd diametral gegenüberliegende Austrittsöffnungen (17) vorgesehen sind, wobei die Mittellinie (18) der Austrittsöffnungen (17) zumindest annähernd jeweils in eine Ecke (19) des rechteck- oder quarderförmigen Behälters (1) gerichtet ist.
2. Feldspritze nach Anspruch 1, dadurch gekennzeichnet, daß die Austrittsöffnungen (17) düsenartig ausgebildet sind.
3. Feldspritze nach Anspruch 1, dadurch gekennzeichnet, daß mehrere Öffnungen (17) übereinander oder nebeneinander angeordnet sind.

FIG. 1

EP 0 405 179 A1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-1939264 (M.C.JURDYC) <br> * Seite 3, letzter Absatz - Seite 4, Absatz 2; Figuren 1-2 * <br> --- | 1-3 | A01M7/00 <br> B01F5/02 |
| Y | US-A-4044079 (O.TVEIT) <br> * Spalte 3, Zeile 64 - Spalte 4, Zeile 19; Figuren 4-5 * <br> --- | 1-3 | |
| A | US-A-3233874 (G.E.BETULIUS) <br> * Spalte 2, Zeilen 5 - 72; Figur 1 * <br> --- | 1-3 | |
| A | DE-B-1298364 (KARL PLATZ GMBH) <br> * Spalte 1, Zeile 30 - Spalte 2, Zeile 49; Figuren 1-6 * <br> --- | 1-3 | |
| A | CH-A-204776 (HCH.WETTSTEIN & SOHN) <br> * Seite 2, linke Spalte, Absatz 5; Figuren 1-3 * <br> --- | 1-3 | |
| A | FR-A-2498082 (ETABLISSEMENTS EVRARD S.A.) <br> * Seite 1, Zeilen 9 - 18; Figur 1 * <br> ----- | 1-3 | **RECHERCHIERTE SACHGEBIETE (Int. Cl.5)** <br><br> A01M <br> B05B <br> B01F |

Der vorliegende Recherchenbericht wurde für alle Patentansprüche erstellt

| Recherchenort | Abschlußdatum der Recherche | Prüfer |
|---|---|---|
| DEN HAAG | 24 SEPTEMBER 1990 | NEHRDICH H.J |